# EUROPÄISCHE PATENTSCHRIFT

(11) **EP 1 304 751 B1**
(45) Veröffentlichungstag und Bekanntmachung des Hinweises auf die Patenterteilung: **27.06.2007**
(21) Anmeldenummer: 02018992.4
(22) Anmeldetag: 27.08.2002
(51) Int. Cl.: H01M 2/30

(54) **Elektrischer Akkumulator**
Electrical accumulator
Accumulateur électrique

(30) Priorität: 19.10.2001 DE 10152684
(43) Veröffentlichungstag der Anmeldung: 23.04.2003
(73) Patentinhaber: VB Autobatterie GmbH & Co. KGaA, 30419 Hannover (DE)
(72) Erfinder: Streuer, Peter, 30559 Hannover (DE); Rosenkranz, Christian, Dr., 31515 Wunstorf (DE); Richter, Gerolf, Dr., 31139 Hildesheim (DE)
(74) Vertreter: Lins, Edgar

(56) Entgegenhaltungen:
- DE-A- 3 545 522
- DE-U- 7 814 129
- FR-A- 2 395 610
- US-A- 4 760 000

## Beschreibung

Die Erfindung betrifft einen elektrischen Akkumulator mit in einem Gehäuse angeordneten positiven und negativen Elektroden mit zwischenliegenden Separatoren und einem Elektrolyten und mindestens einem Endpol, der mit einem Kontaktschutz in Form einer den Endpol umgehenden frei drehbaren Wandung aus Isoliermaterial versehen ist. Bevorzugt anwendbar ist die Erfindung bei Starterbatterien für Kraftfahrzeuge.

Endpole und Kabelanschlüsse für elektrische Akkumulatoren, insbesondere für Starterbatterien, sind in verschiedenen Ausführungsformen bekannt.

Aus dem Dokument DE 26 45 977 C3 ist ein Polanschluss für Batterien bekannt, der auf einen zylindrischen Endpol aufsteckbar ist, der aus einer innen glatten Steckbuchse mit Längsschlitzen besteht.

In der Druckschrift DE 28 14 444 C2 ist die Konstruktion eines Endpols mit Außengewinde dargestellt, auf den entweder ein Kabelschuh mit Innengewinde geschraubt ist oder ein Kabelschuh mit einer Mutter festgeklemmt ist. Eine Gummikappe zieht sich in abdeckend abdichtender Weise über den Kabelanschluss.

Ein Endpol mit Außengewinde, der mit flachen Kabellaschen verschraubt wird, ist dem Dokument DE 35 45 522 C2 zu entnehmen. Diese Akkumulatorenbatterie besitzt ein Gehäuse mit zwei Anschlüssen. Durch die Formgebung einer elektrisch iso-Iierenden Wandung ist gewährleistet, dass jeder Pol nur mit der zugehörigen Kabellasche verbunden werden kann.

Nachteilig ist bei diesen Anordnungen, dass sie über den Batteriedeckelumriss hinausragen und damit beim Stapeln von Batterien leicht beschädigt werden können. Vor und während der Montage der elektrischen Akkumulatoren ist kein ausreichender Berührungsschutz vorhanden, der insbesondere bei höheren Betriebsspannungen von Bedeutung ist. Die Kabelführung ist durch die Ausformung des Endpols festgelegt.

Aus der FR 2 395 610 A ist ein Akkumulator mit Endpolen bekannt, auf die ein mit einem Kontaktschutzelement abgedecktes Anschlusskabel aufgesteckt werden kann. Die Endpole des Akkumulators sind vor Durchführung des Kabelanschlusses frei zugänglich, so dass beim Stapeln der noch nicht kontaktierten Batterien die Endpole leicht beschädigt werden können und kein Berührungsschutz vorhanden ist.

In der DE 35 45 522 A ist ein elektrischer Akkumulator beschrieben, bei dem die Endpole mit einem Kontaktschutz in Form einer den Endpol umgebenden Wandung aus Isoliermaterial versehen sind. Die Wandung ist fest mit dem Batteriedeckel verbunden und hat seitlich einen Einführschlitz für ein Anschlusskabel.

Die starre Befestigung der Wandung an dem Batteriedeckel bereitet bei der automatisierten Montage der Anschlusskabel an die Endpole Probleme.

Aufgabe der Erfindung ist es, einen Akkumulator mit einem nicht über den Batteriedeckelumriss hinausragenden Endpol anzugeben, der bei flexibler Führung eines Kabelanschlusses weitestgehend gegen Berührung gesichert ist, leicht herstellbar und auch leicht montierbar ist.

Diese Aufgabe wird erfindungsgemäß bei einem elektrischen Akkumulator der eingangs genannten Gattung durch die kennzeichnenden Merkmale des Anspruchs 1 gelöst. In den Unteransprüchen sind vorteilhafte Ausgestaltungen der Erfindung angegeben.

Bei Verwendung eines elektrischen Akkumulators mit der erfindungsgemäßen Ausführung der Batteriepole ist eine Vertauschung mit einem Akkumulatorentyp mit anderer Spannung und die Vertauschung der elektrischen Pole untereinander sicher verhindert. Dabei sind die Akkumulatorpole berührungssicher gestaltet und können beispielsweise nicht durch übliche Starthilfekabel mit den Polen anderer Akkumulatoren verbunden werden.

Der besondere Vorteil der Erfindung besteht darin, dass bei der Herstellung der Klemmverbindung mit Metallwerkzeug ebenso wenig die Gefahr eines elektrischen Kurzschlusses besteht wie bei der Verwendung von handbetätigten elektrisch isolierten Steckverbindern.

Aufbau und Funktionsweise des erfindungsgemäßen Akkumulatoren werden im Folgenden anhand der Figuren erläutert.
Fig. 1 zeigt eine Gesamtansicht eines Batteriedeckels mit den erfindungsgemäßen Polen.
Fig. 2 zeigt einen Schnitt durch den neuen Batteriepol und eine Schraubkappe.

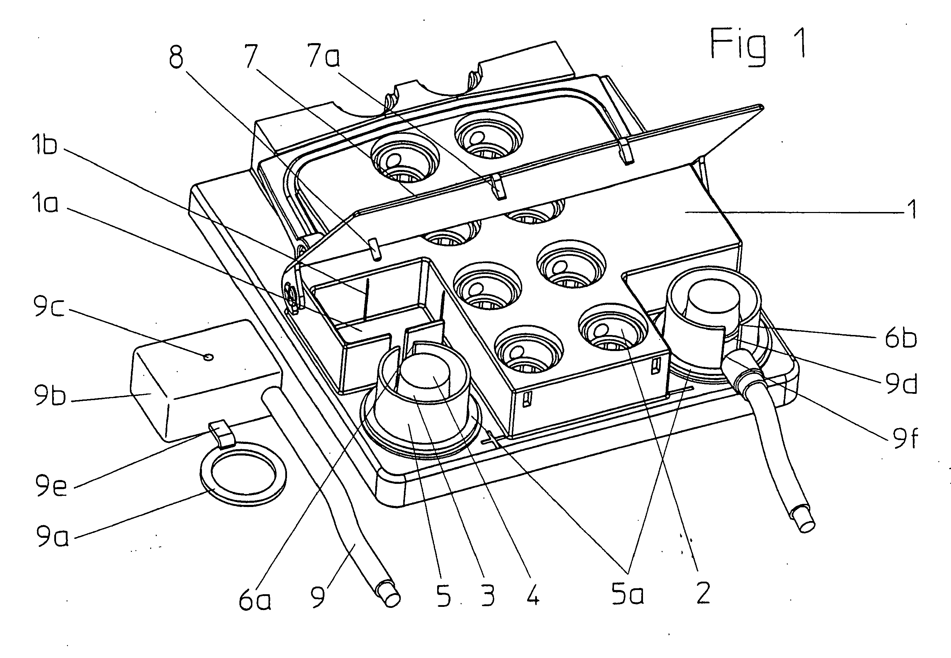

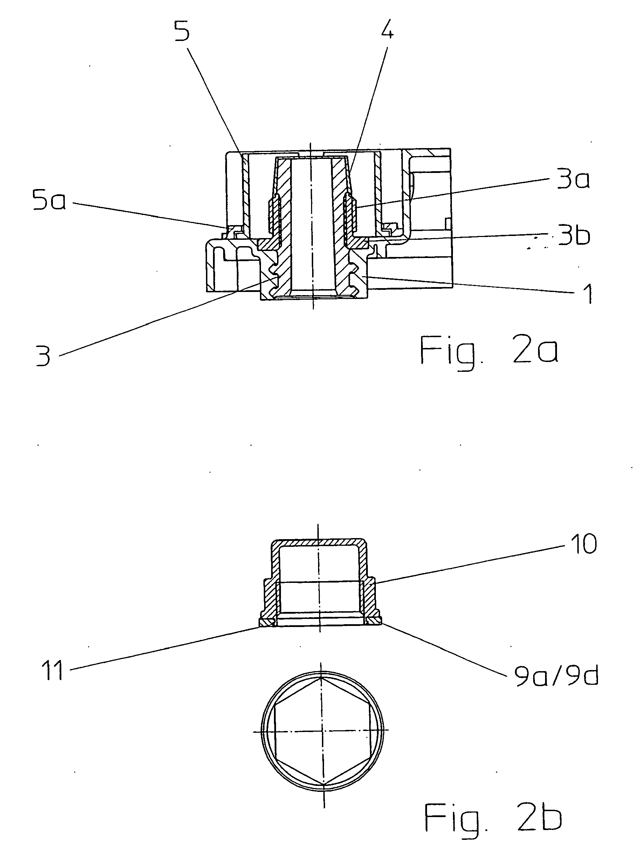

Gemäß Figur 1 ist der Endpol 3 am Deckel 1, der auch die üblichen Einfüllöffnungen 2 enthält, angeordnet. Ein zylindrischer, frei drehbarer Kontaktschutz 5 in Form einer den Endpol 3 umgebenden Wandung schirmt den Endpol 3 derart an allen Seiten ab, dass der Endpol nur von oben und über schmale, vertikale Schlitze 6a und 6b im umgebenden Kontaktschutz 5 aus elektrisch isolierendem Kunststoff zugänglich ist. Als Kabelanschluss dient eine ringförmige Kabellasche 9a oder 9d, die über den Endpol 3 greift und die während des Kontaktierungsvorganges erst nach Passieren einer elektrisch isolierenden Polkappe 4 den Kontakt zum Endpol 3 ermöglicht. Die Befestigung der ringförmigen Kabellasche erfolgt vorzugsweise mit einer Schraubkappe 10 (Figur 2b), die in der Gesamtansicht nicht dargestellt ist. Der Kontaktschutz ist in einem am Deckel 1 vorgesehenen Befestigungsring 5a oder in am Deckel 1 angeformten Befestigungskrallen gehalten.

Figur 2 zeigt einen Schnitt durch den Endpol (Fig. 2a) und die mit der korrespondierenden Kabellasche 9a, 9d verbundene Schraubkappe 10 (Fig. 2b). Der Endpol 3 besitzt in an sich bekannter Weise auf seiner Außenfläche eine Gewindehülse 3a, die beispielsweise aus verbleitem Messing besteht. Um vollkommene Berührungssicherheit zu gewährleisten, ist auf den Endpol 3 eine Polkappe 4 aufgesetzt, die formschlüssig mit dem Endpol verbunden ist. Diese ist zumindest in dem von oben zugänglichen Bereich elektrisch isolierend ausgebildet und besteht vorzugsweise vollständig aus einem harten Kunststoff, wie beispielsweise einem Duroplast oder gefülltem Polypropylen. Die ringförmige Kabellasche 9a, 9d korrespondiert in ihrem Durchmesser mit dem Durchmesser des jeweiligen Endpols 3 und der für die Kabellasche 9a, 9d vorgesehenen Auflagefläche 3b. Durch das Festdrehen der Schraubkappe 10 wird die an ihr durch eine ringförmige Nut oder angeformte Befestigungskrallen 11 unverlierbar befestigte ringförmige Kabellasche 9a oder 9d in den umlaufenden Spalt zwischen dem Endpol 3 und dem zylinderförmigen Kontaktschutz 5 auf den Endpol 3 geschoben. Die unverlierbare Schraubkappe 10 besteht zumindest in dem von der Kabellasche abgewandten Teil aus Isoliermaterial, beispielsweise aus einem harten Kunststoff, wie einem Duroplast oder gefülltem Polypropylen und besitzt ein innenliegendes metallisches Schraubgewinde.

Um ein Vertauschen der positiven und negativen Kabel 9 mit dem zugehörigen Endpol zu vermeiden, sind die Kabellaschen 9a und 9d mit für den positiven und negativen Kabelanschluss mit ungleich gewählten Breiten der Anschlüsse 9e und 9f versehen. Diese Breiten korrespondieren mit den ebenfalls ungleichen Breiten der Schlitze 6a und 6b des Kontaktschutzes 5.

Die Vertauschungssicherheit der Kabel 9 kann auch durch unterschiedliche Durchmesser der Endpole 3 erreicht werden, die mit unterschiedlich weiten Bohrungen der Kabellaschen 9a und 9d korrespondieren. Die größte Sicherheit wird erzielt, wenn beide Maßnahmen kombiniert werden und beispielsweise ein Endpol 3 mit geringerem Durchmesser mit einem schmalen Schlitz 6a oder 6b des Kontaktschutzes 5 sowie ein Endpol 3 mit einem größeren Durchmesser mit einem breiteren Schlitz 6a oder 6b des Kontaktschutzes 5 kombiniert werden.

Außer mit der zuvor beschriebenen Klemmung einer Kabellasche 9a oder 9d ist der elektrische Anschluss auch durch eine Steckverbindung möglich. In dieser Variante kann das Außengewinde am Endpol 3 entfallen. Die elektrische Kontaktfläche des Endpols 3 kann vorteilhaft mit einer Strukturprägung der Oberfläche, beispielsweise durch umlaufende Nuten, versehen sein.

Wenigstens eine der Kabellaschen 9a oder 9d oder ein Steckverbinder kann vorzugsweise mit einem Zusatzgerät kombiniert sein. Für dieses Gerät kann Montageraum in der Konstruktion des Deckels 1 vorgesehen sein. So kann beispielsweise ein Batterietrennschalter 9b vorgesehen sein, der in einer Aussparung 1a im Deckel 1 durch Führungsrippen 1b positioniert ist und die Unterbrechung der Verbindung eines Endpols 3 des Akkumulators zu einem elektrischen Netz unter Last verhindert. Dieser Batterietrennschalter 9b kann vorzugsweise durch Betätigen einer Polabdeckung 7 geschaltet werden, die am Deckel 1 gelenkig befestigt sein kann. Die Polabdeckung 7 kann an der Unterseite einen angeformten Dorn 8 zur Schalterbetätigung aufweisen, der in eine Schaltöffnung 9c des Batterietrennschalters 9b eingreifen kann. Es ist aber auch ein berührungsloser Mechanismus realisierbar, beispielsweise mit einem am Deckel befestigten Magneten und einem Reed-Relais im Batterietrennschalter 9b. Eine Arretierung der Polabdeckung 7 im geschlossenen Zustand kann über Schnapphaken 7a am Deckel 1 erfolgen. Ein Freischalten des Akkumulators kann aber auch durch Betätigung des Batterietrennschalters 9b über externe Sensoren, von einem Bordnetzsteuergerät aus oder durch eine andere entfernt angeordnete Steuerung erfolgen. Die Sensoren können beispielsweise Temperatursensoren, Überstromsensoren oder Unfallsensoren sein. Von einem Bordnetzsteuergerät werden gemessene physikalische Größen ausgewertet; eine Freischaltung des Akkumulators erfolgt beispielsweise in Abhängigkeit vom Wert des Ladezustands (SOC, state of charge), vom Wert der Gebrauchstüchtigkeit (SOH, state of health) oder anderen abgeleiteten Größen.

## Patentansprüche

1. Elektrischer Akkumulator mit in einem Gehäuse angeordneten positiven und negativen Elektroden mit zwischen legenden Separatoren und einem Elektrolyten und mindestens einem Endpol der mit einem Kontaktschutz (5) in Form einer den Endpol (3) umgebenden zylinderförmigen Wandung aus Isoliermaterial versehen ist, der mindestens einen Schlitz (6a, 6b) zur Einführung eines Anschlusskabels aufweist, **dadurch gekennzeichnet, dass** der Kontaktschutz (5) frei drehbar in einem mit dem Deckel (1) verbundenen Befestigungsring (5a) gehalten oder frei drehbar mit am Deckel (1) angeformten Befestigungskrallen befestigt ist.

2. Elektrischer Akkumulator nach Anspruch 1, **dadurch gekennzeichnet, dass** der Endpol (3) mit einer elektrisch isolierenden Polkappe (4) abgedeckt ist.

3. Elektrischer Akkumulator nach einem der Ansprüche 1 oder 2, **dadurch gekennzeichnet, dass** der Endpol (3) mit einer Gewindehülse (3a) versehen ist.

4. Elektrischer Akkumulator nach einem der Ansprüche 1 bis 3, **dadurch gekennzeichnet, dass** auf die Gewindehülse (3a) eine an der Kabellasche (9a, 9d) eines Anschlusskabels (9) unverlierbar angebrachte elektrisch isolierende Schraubkappe (10) aufschraubbar ist.

5. Elektrischer Akkumulator nach Anspruch 4, **dadurch gekennzeichnet, dass** die Schraubkappe (10) aus einem harten Kunststoffmaterial mit innen liegendem metallischen Schraubgewinde besteht.

6. Elektrischer Akkumulator nach einem der Ansprüche 1 bis 5, **dadurch gekennzeichnet, dass** der Kontaktschutz (5) am positiven und negativen Endpol (3) unterschiedlich breite Schlitze (6a, 6b) besitzt.

7. Elektrischer Akkumulator nach einem der Ansprüche 1 bis 6, **dadurch gekennzeichnet, dass** positiver und negativer Endpol (3) unterschiedliche Durchmesser besitzen.

## Claims

1. An electrical accumulator having positive and negative electrodes, which are arranged in a housing with separators between them, and having an electrolyte and at least one end pole, provided with a contact protection device (5) in the form of a cylindrical wall composed of insulating material which surrounds the end pole (3), and which contact protection device (5) has at least one slot (6a, 6b) for insertion of a connecting cable, **characterized in that** the contact protection device (5) is held freely rotatable in a mounting ring (5a), which is connected to the cover (1) or is freely rotatable attached by means of attachment claws which are integrally formed on the cover (1).

2. The electrical rechargeable battery as claimed in claim 1, **characterized in that** the end pole (3) is covered by an electrically insulating pole cap (4).

3. The electrical rechargeable battery as claimed in claim 1 or 2, **characterized in that** the end pole (3) is provided with a threaded sleeve (3a).

4. The electrical rechargeable battery as claimed in one of claims 1 to 3, **characterized in that** an electrically insulating screw cap (10), which is fitted in a captive manner to the cable lug (9a, 9d) of the connecting cable (9), can be screwed to the threaded sleeve (3a).

5. The electrical rechargeable battery as claimed in claim 4, **characterized in that** the screw cap (10) is composed of a hard plastic material with an internal metallic screw thread.

6. The electrical rechargeable battery as claimed in one of claims 1 to 5, **characterized in that** the contact protection device (5) has slots (6a, 6b) of different width on the positive and the negative end pole (3).

7. The electrical rechargeable battery as claimed in one of claims 1 to 6, **characterized in that** the positive and negative end poles (3) have different diameters.

## Revendications

1. Accumulateur électrique comprenant dans un boîtier des électrodes positives et négatives et des séparateurs interposés, ainsi qu'un électrolyte et au moins une borne terminale pourvu d'une protection de contact (5) sous la forme d'une paroi cylindrique constituée d'un matériau isolant entourant la borne terminale (3), et présentant au moins une fente (6a, 6b) pour introduire un câble de raccordement,
**caractérisé en ce que**
la protection de contact (5) est maintenue de manière à pouvoir tourner librement dans une bague de fixation (5a) reliée au couvercle (1) ou est fixée de manière à pouvoir tourner librement à des pattes de fixation formées au niveau du couvercle (1).

2. Accumulateur électrique selon la revendication 1,
**caractérisé en ce que**
la borne terminale (3) est recouverte d'un capuchon de pôle électriquement isolant (4).

3. Accumulateur électrique selon l'une des revendications 1 ou 2,
**caractérisé en ce que**
la borne terminale (3) est pourvue d'une douille filetée (3a).

4. Accumulateur électrique selon l'une des revendications 1 à 3,
**caractérisé en ce que**
sur la douille filetée (3a) peut être vissé un capuchon à vis (10) électriquement isolant, monté de façon inamovible au niveau du mou de câble (9a, 9d) d'un câble de raccordement (9).

5. Accumulateur électrique selon la revendication 4,
**caractérisé en ce que**
le capuchon à vis (10) se compose d'un matériau en matière synthétique dur avec un filetage intérieur métallique.

6. Accumulateur électrique selon l'une des revendications 1 à 5,
**caractérisé en ce que**
les protections de contact (5) sur les bornes terminales d'extrémité positive et négative (3) possèdent des fentes (6a, 6b) de largeurs différentes.

7. Accumulateur électrique selon l'une des revendications 1 à 6,
**caractérisé en ce que**
les bornes positive et négative (3) ont des diamètres différents.
